# FASCICULE DE BREVET EUROPEEN

(11) **EP 3 001 521 B1**
(45) Date de publication et mention de la délivrance du brevet: **15.11.2017**
(21) Numéro de dépôt: 15173275.7
(22) Date de dépôt: 23.06.2015
(51) Int. Cl.: H02B 1/24, H02B 13/035

(54) **APPAREILLAGE DE PROTECTION ELECTRIQUE MOYENNE TENSION À COMPTAGE DU COURANT**
MITTELSPANNUNGSSCHUTZGERÄT MIT STROMZÄHLUNG
MEDIUM-VOLTAGE ELECTRICAL SWITCHGEAR WITH METERING OF THE CURRENT

(30) Priorité: 23.09.2014 FR 1458954
(43) Date de publication de la demande: 30.03.2016
(73) Titulaire: Schneider Electric Industries SAS, 92500 Rueil-Malmaison (FR)
(72) Inventeur: PERRONE, Michel, 38050 Grenoble (FR); FILIPPI, Gianluca, 38050 Grenoble (FR); KAMAL, Mohammed Hasbir, Cedex 09 Grenoble (FR)
(74) Mandataire: Colette, Marie-Françoise

(56) Documents cités:
- EP-A1- 0 871 268
- EP-B1- 0 803 141
- "www.siemens.com/medium-voltage-switchgear Switchgear Type 8DJH for Secondary Distribution Systems up to 24 kV, Gas-Insulated Medium-Voltage Switchgear . Catalog HA 40.2 . 2014", , 9 mai 2014 (2014-05-09), pages 1-91, XP055188793, Extrait de l'Internet: URL:http://w3.siemens.com/powerdistributio n/global/sitecollectiondocuments/en/mv/swi tchgear/gas-insulated/8djh/catalogue-8djh_ en.pdf [extrait le 2015-05-12]

## Description

### DOMAINE TECHNIQUE

La présente invention concerne un appareillage de protection électrique moyenne tension logé dans une enveloppe comportant un gaz isolant et comportant au moins un appareil réalisant une fonction électrique, le ou l'un des appareils réalisant la fonction disjoncteur, la ou chaque fonction électrique étant associée à un jeu de traversées dit principal comportant un certain nombre de traversées, ce nombre correspondant au nombre de phases de l'appareillage.

### ETAT DE LA TECHNIQUE ANTERIEURE

Les appareils installés dans les postes électriques, sont traditionnellement isolés dans l'air. Ceux-ci sont placés dans des kiosks pour former des postes de transformation ou de livraison.

Cette technologie d'isolement des parties actives dans l'air présente l'inconvénient d'être très encombrante car elle impose des distances d'isolement entre les parties actives et la terre qui peuvent atteindre plusieurs dizaines de centimètres selon le niveau de tension.

A l'inverse, un appareillage à isolation gazeuse communément appelé GIS (Gaz Insulated Switchgear) s'affranchit de ces grandes distances et les appareils peuvent donc fonctionner en toute sécurité car leur enveloppe fermée qui contient les jeux de barre est étanche et possède un gaz diélectrique. Un appareillage qui met en oeuvre cette technologie occupe ainsi moins de place qu'une unité fonctionnelle à isolation dans l'air.

Ces appareils dits GIS peuvent intégrer plusieurs fonctions (sectionneur, interrupteur, disjoncteur....) afin de former une unité fonctionnelle qui présente les avantages d'une conception de type « compact ».

L'ensemble de ces fonctions sont liées par un jeu de barres qui se trouve à l'intérieur de la cuve étanche contenant le gaz diélectrique. L'isolation est dite intégrale, ce qui rend l'appareillage GIS insensible à son environnement extérieur et aux ambiances sévères d'humidité et de température rencontrées dans les kiosks grâce à son enveloppe métallique. En effet, cette enveloppe métallique garde les lignes de champs électriques à l'intérieur de celle-ci par opposition à un enveloppe isolante qui présente un gradient de lignes de champs électrique dans l'isolant, cet isolant pouvant ainsi voir son champ électrique interne dans le matériau augmenter de façon importante en fonction de l'importance du taux d'humidité et de la température externe jusqu'à la création de décharges partielles de surface ou interne.

Ces appareillages de type GIS sont donc compacts et possèdent plusieurs fonctions. Chacune de ces fonctions est équipée de trois traversées correspondant chacune à une phase. Des câbles sont raccordés électriquement aux traversées précitées et servent aux départs vers d'autres applications ou à l'arrivée. Ces traversées assurent l'étanchéité et le raccordement entre les câbles et la cuve. La cuve comporte également un jeu de barres interne à la cuve et qui relie les fonctions de l'unité fonctionnelle entre elles, phase par phase.

Dans un volume équivalent à celui d'un appareillage monobloc GIS classique (3 fonctions ou autres), l'intégration d'une fonction comptage est difficilement possible avec des capteurs de courant traditionnels, lesquels sont le plus souvent volumineux et lourds.

On utilise habituellement en effet des capteurs de mesure classiques en epoxy et des barres de raccordement gainées laissant les extrémités de raccordement nues. Ces systèmes sous forte température, humidité et poussières favorisent les décharges partielles de surface.

Ainsi, ces capteurs de courant traditionnels n'offrent pas, ou bien offrent peu de tenue aux environnements sévères en température, humidité et agressions chimiques. De plus, ces capteurs traditionnels offrent peu de modularité dans le positionnement de ces capteurs de part et d'autre du disjoncteur de protection lequel est souvent placé en position centrale.

Aujourd'hui, cette attente de modularité est très forte au niveau des capteurs de mesure du courant du fait que le poste de livraison ou d'autres applications peuvent servir pour compter l'énergie du distributeur vers le client, mais aussi du client vers le distributeur avec la production éolienne, de biomasse, et de façon plus générale, les énergies renouvelables. De ce fait, l'ajout d'un module supplémentaire est dans les solutions classiques, indispensable, et génère un encombrement important au niveau de l'appareillage. Cet ajout s'oppose aux exigences de compacité.

De plus, les unités fonctionnelles moyenne tension à comptage de courant ne permettent pas une alimentation indifféremment par la gauche ou la droite.

On connaît le document « www.siemens.com/medium-voltage-switchgear Switchgear Type 8DJH for Secondary Distribution Systems up to 24 kV, Gas-Insulated Medium-Voltage Switchgear Catalog HA 40.2.2014", décrivant un appareillage comportant les caractéristiques du préambule de la revendication 1.

### EXPOSE DE L'INVENTION

La présente invention résout ces problèmes et propose une unité fonctionnelle moyenne tension pour le comptage du courant, compact, présentant une grande tenue aux environnements sévères en température, humidité et agressions chimiques, présentant une certaine modularité dans le positionnement des capteurs, lesquels peuvent être positionnés indifféremment à gauche ou à droite du disjoncteur de protection, et permettant à l'unité fonctionnelle d'être alimenté par le côté droit ou bien le côté gauche de l'unité fonctionnelle.

A cet effet, la présente invention a pour objet un appareillage électrique moyenne tension du genre précédemment mentionné, cet appareillage étant caractérisé en ce que le jeu de barres précité est blindé et en ce que ces deux ensembles de traversées sont destinées à recevoir respectivement un transformateur de courant de protection et un transformateur de courant de mesure à tore basse tension.

Grâce à ces caractéristiques, l'on obtient un appareillage qui intègre une fonction comptage dans un volume correspondant au volume d'un appareil classique n'en comportant pas.

En outre, cette disposition permet l'association, directement à droite ou à gauche du disjoncteur, d'autres appareils tels des sectionneurs.

Selon une réalisation particulière, cet appareillage comporte au moins deux appareils dont l'un réalise la fonction disjoncteur et dont le ou au moins l'un des autres appareils, est associé à un jeu de traversées additionnel dont les traversées sont reliées électriquement respectivement aux traversées du jeu de traversées dit principal correspondant, par un jeu de barres additionnel extérieur dit second isolé et blindé, ce jeu de traversées additionnel étant destiné à recevoir un transformateur de courant de mesure. Ces caractéristiques permettent la mesure du courant du distributeur vers le client ou bien du client vers le distributeur, selon que le second appareil est placé à droite ou à gauche du disjoncteur et selon le sens d'alimentation de l'appareillage.

Selon une réalisation particulière, cet appareillage comportant trois appareils respectivement un sectionneur, un disjoncteur et un sectionneur, chaque appareil est associé à un jeu de traversées additionnel et à un jeu de barres isolé et blindé additionnel, les jeux de traversées additionnels associés aux deux sectionneurs étant aptes à recevoir un transformateur de courant de mesure.

Ceci permet, en outre des avantages déjà mentionnés plus haut, une grande modularité au niveau de la disposition des capteurs de mesure sur l'un ou l'autre des sectionneurs, en fonction du rôle attribué au poste de livraison (comptage du courant du distributeur vers le client, ou du client vers le distributeur).

Selon une caractéristique particulière, le ou chaque transformateur de courant précité est placé autour des traversées du jeu de traversées correspondant et des interfaces de connexion des jeux de barre additionnels auxdites traversées. L'utilisation de transformateur basse tension en combinaison avec les jeux de barre isolés et blindés permet d'obtenir une insensibilité à l'environnement en ambiances sévères

Selon une autre caractéristique, le nombre de phase est de trois, chaque fonction étant donc équipée de trois traversées correspondant chacune à une phase.

Selon une autre caractéristique, ledit appareillage comporte des traversées extensibles à chaque extrémité, lesdites traversées étant destinées à permettre l'accouplement de l'appareillage à un autre appareillage du même type.

Selon une autre caractéristique, le(s) transformateur(s) sont fixé(s) autour des traversées correspondante(s) par l'intermédiaire d'une plaque en matériau inoxydable fixée sur un support fixe dudit appareillage et comportant quatre tiges fixées à ladite plaque, lesdites tiges s'étendant perpendiculairement à ladite plaque, et étant destinées à coopérer avec quatre orifices oblongs prévus dans le transformateur, de manière à permettre le guidage dudit transformateur lors de son montage autour des traversées.

Ce système permet de garantir l'absence de chocs sur les traversées moyenne tension lors de la mise en place des capteurs de courant de protection et de mesure.

### BREVE DESCRIPTION DES DESSINS

Mais d'autres avantages et caractéristiques de l'invention apparaîtront mieux dans la description détaillée qui suit et se réfère aux dessins annexés donnés uniquement à titre d'exemple et dans lesquels :
- Les figures 1 à 5 illustrent selon différentes vues, une unité fonctionnelle moyenne tension selon l'art antérieur, tandis que les figures 6 à 18 sont relatives à une unité fonctionnelle moyenne tension selon l'invention.
- La figure 1 représente le schéma électrique de l'unité fonctionnelle, illustrant les différentes fonctions électriques réalisées par cette unité fonctionnelle,
- La figure 2 représente une vue de face de l'unité en position de service,
- La figure 3 illustre une partie de l'intérieure de l'unité, vue de l'arrière de l'appareillage,
- La figure 4 est une vue en perspective de ladite unité, montrant partiellement sa partie intérieure et vue de l'avant,
- La figure 5 est une vue en coupe selon V-V de la figure 4,
- Les figures 6 et 7 représentent deux schémas électriques correspondant respectivement à deux modes de réalisation de l'unité fonctionnelle selon l'invention, se distinguant par le sens d'alimentation de l'unité,
- La figure 8 est une vue en perspective montrant la partie intérieure de l'unité fonctionnelle selon l'un des modes de réalisation de l'invention, vu de l'avant de l'appareil,
- La figure 9 est une vue partielle en perspective, illustrant le montage du capteur de protection sur les traversées selon l'invention,
- La figure 10 est une vue partiellement en coupe selon un plan sensiblement perpendiculaire à la direction longitudinale de l'unité fonctionnelle, et illustrant le montage de l'ensemble comportant les capteurs de mesure et de protection et du jeu de barre supplémentaire, sur les traversées appartenant à l'une des phases de l'un des appareils de l'unité fonctionnelle,
- La figure 11 est une vue partielle en coupe de ces capteurs et du jeu de barre supplémentaire, en position montée de cet ensemble sur les traversées,
- Les figures 12 et 13 sont deux vues en perspective de cette unité fonctionnelle, illustrant sa partie intérieure et vue de l'arrière,
- La figure 14 est une vue partielle en perspective, illustrant un mode de fixation avantageux des capteurs sur les traversées, selon une réalisation particulière de l'invention,
- La figure 15 est une vue de face de l'un de ces capteurs, et
- Les figures 16,17 et 18 sont trois schémas électriques correspondant à trois réalisations différentes de l'unité fonctionnelle selon l'invention.

### EXPOSE DETAILLE DE PLUSIEURS MODES DE REALISATION DE L'INVENTION.

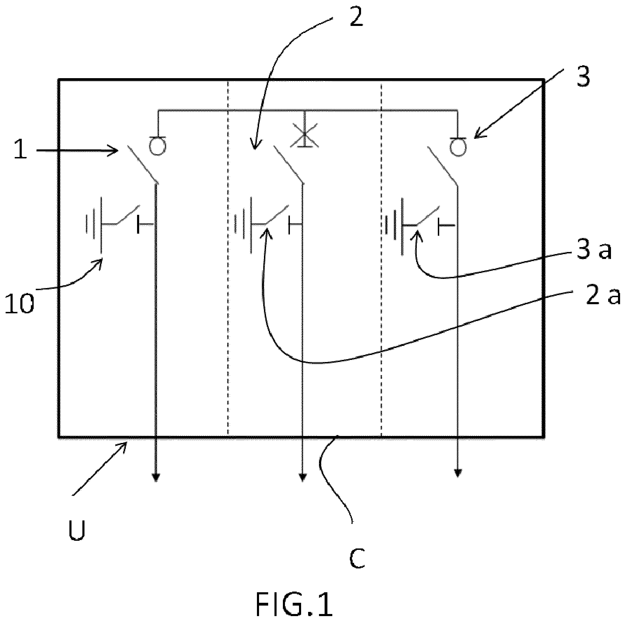

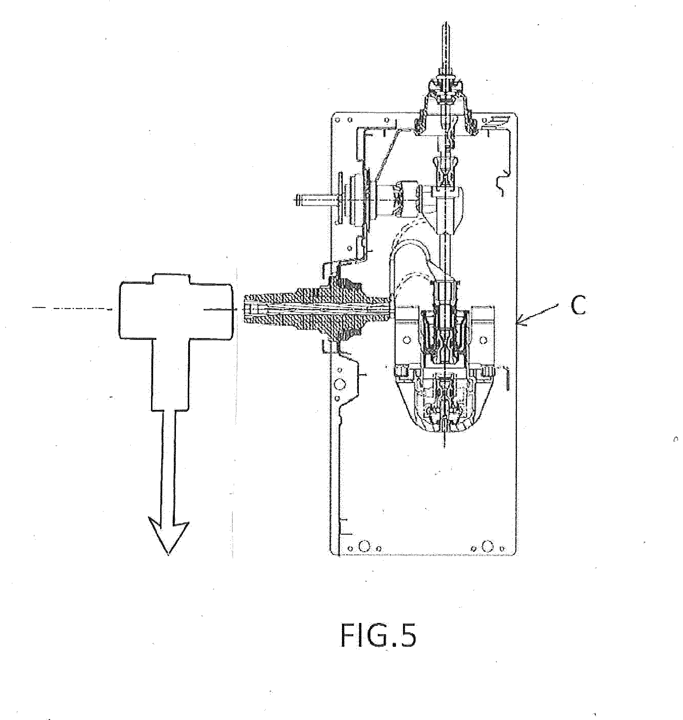

Les figures 1 à 5 représentent une unité fonctionnelle U selon l'art antérieur formée de trois appareils 1,2,3 montés en parallèle, le premier 1 comportant un interrupteur-sectionneur relié électriquement avec un sectionneur de mise à la terre 1a, le second comportant un disjoncteur 2 relié électriquement avec un sectionneur de mise à la terre 2a, et le troisième comportant un interrupteur-sectionneur 3 comportant également un sectionneur de mise à la terre 3a, tous ces appareils étant logés dans une cuve étanche C.

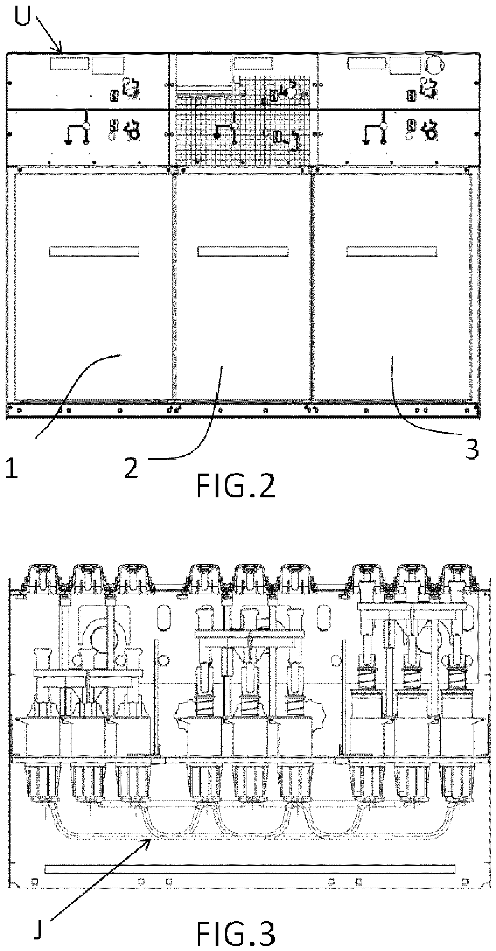

Ces différentes fonctions sont reliées électriquement, phase par phase, par un jeu de barres intérieure J logé dans cette cuve étanche, ladite cuve contenant un gaz diélectrique, tel que ceci est illustré sur la figure 3. L'isolation diélectrique est intégrale, grâce à l'enveloppe métallique formant la partie extérieure de la cuve, ce qui rend l'appareillage insensible à son environnement extérieur et aux ambiances sévères d'humidité et de température rencontrées.

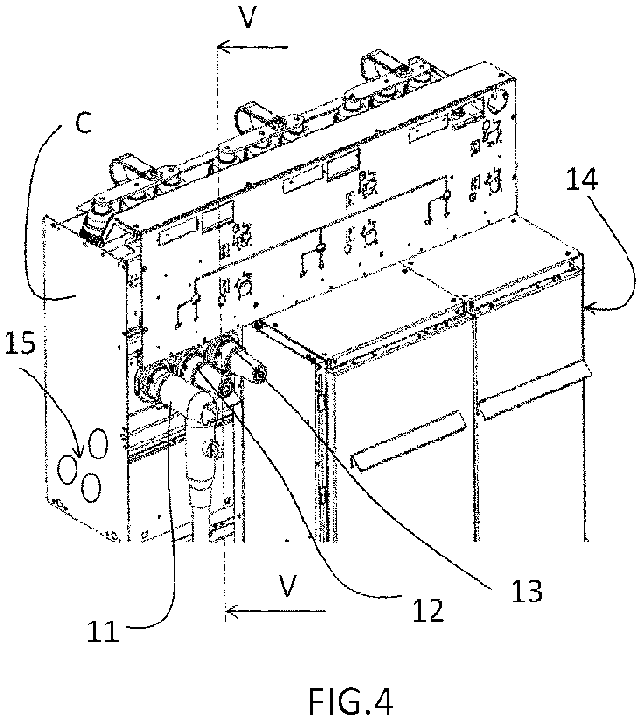

Tel qu'illustré sur la figure 4, l'unité comporte, associées aux différentes fonctions, un certain nombre de traversées 11,12 et 13 destinées à être reliées électriquement aux câbles de départ ou d'arrivée. Chaque fonction 1,2,3 est équipée de trois traversées, une pour chacune des phases. Ces traversées assurent l'étanchéité électrique entre les câbles et la cuve. La cuve comporte également, à ses deux extrémités opposées, des traversées extensibles 14,15 permettant son association à une autre unité fonctionnelle.

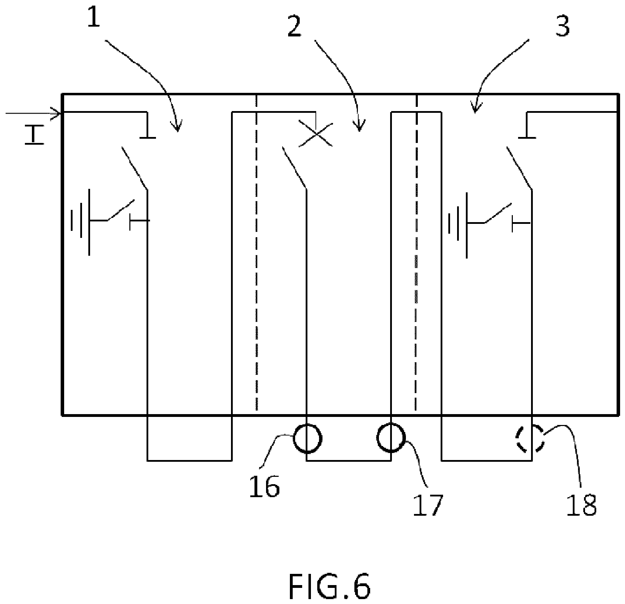

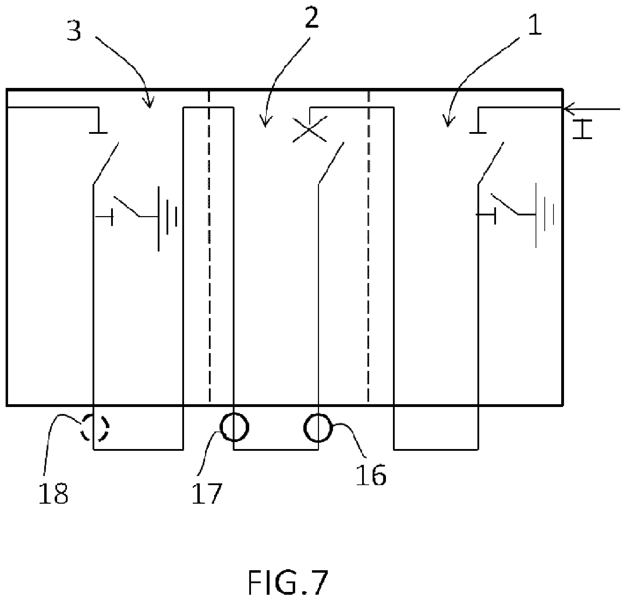

Sur les figures 6 et 7, l'on voit deux schémas électriques différents correspondant à deux réalisations différentes de l'invention dans lesquelles sur la figure 6, l'alimentation en courant I de l'unité fonctionnelle s'effectue par le côté gauche de l'unité fonctionnelle, et sur la figure 7, cette alimentation I s'effectuant par le côté droit de l'unité fonctionnelle.

Selon l'invention, un transformateur de courant de protection basse tension 16 et un transformateur de courant de mesure basse tension 17 sont montés en série en aval du disjoncteur 2. Un autre transformateur de mesure du courant 18 est optionnellement placé en amont du sectionneur situé en sortie de l'unité fonctionnelle afin de permettre de mesurer le courant fourni au distributeur par le client.

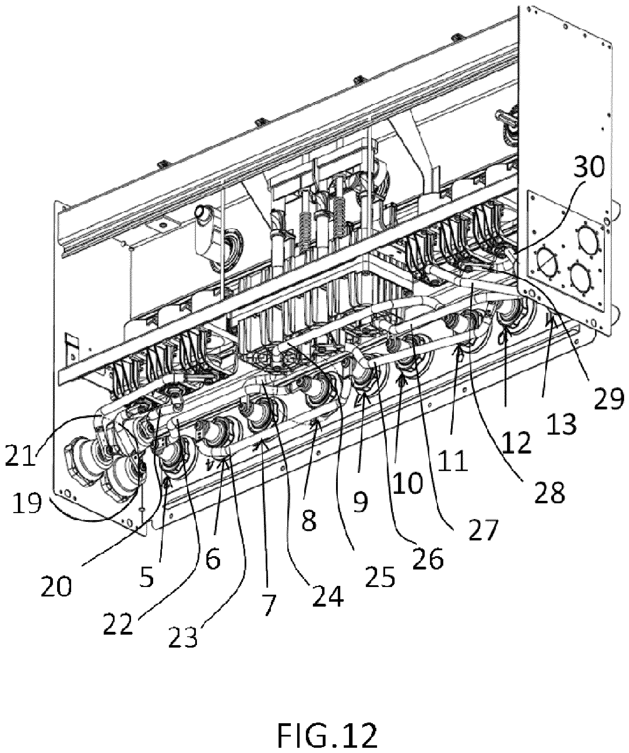

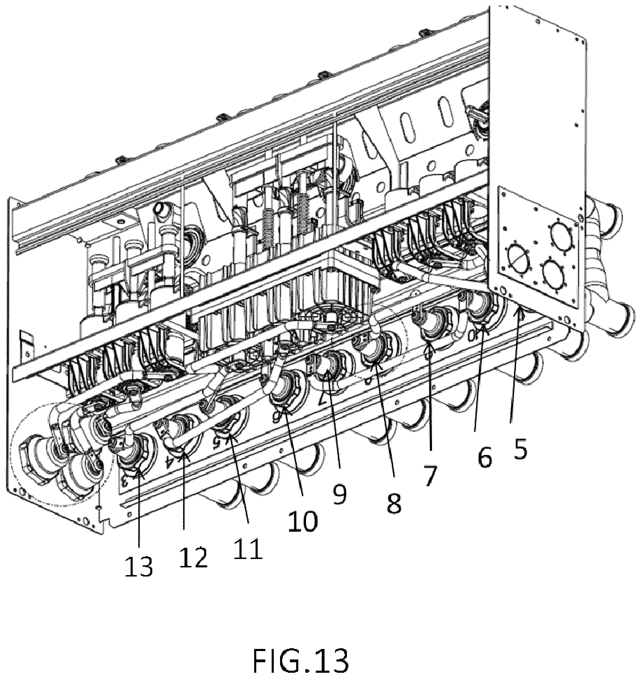

Les figures 12 et 13 illustrent plus particulièrement le cheminement interne des conducteurs à l'intérieur de l'unité. Ainsi, lors d'une alimentation par la droite tel qu'illustré sur la figure 12, les trois conducteurs 28,29,30 sont raccordés, phase par phase, à l'entrée du sectionneur d'entrée 1, puis la sortie de ce sectionneur s'effectue par les traversées 11,12,13, lesquelles sont reliées respectivement par des conducteurs 25,26,27 aux entrées du disjoncteur, puis reliées électriquement, phase par phase aux traversées 8,9,10, qui elles-mêmes sont reliées par d'autres conducteurs 22,23,24, aux traversées 5,6,7 reliées électriquement à l'entrée du sectionneur de sortie 3, dont la sortie est reliée à la sortie de l'appareillage par d'autres conducteurs 19,20,21.

Le même principe de raccordement s'applique pour l'unité fonctionnelle illustrée sur la figure 13, à ceci près que l'alimentation s'effectue par le côté gauche de l'unité.

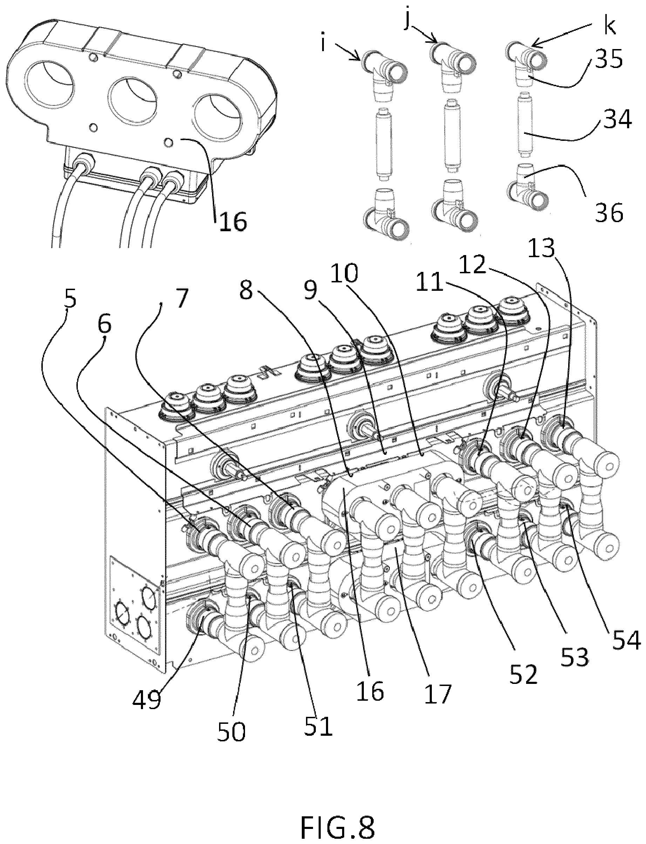

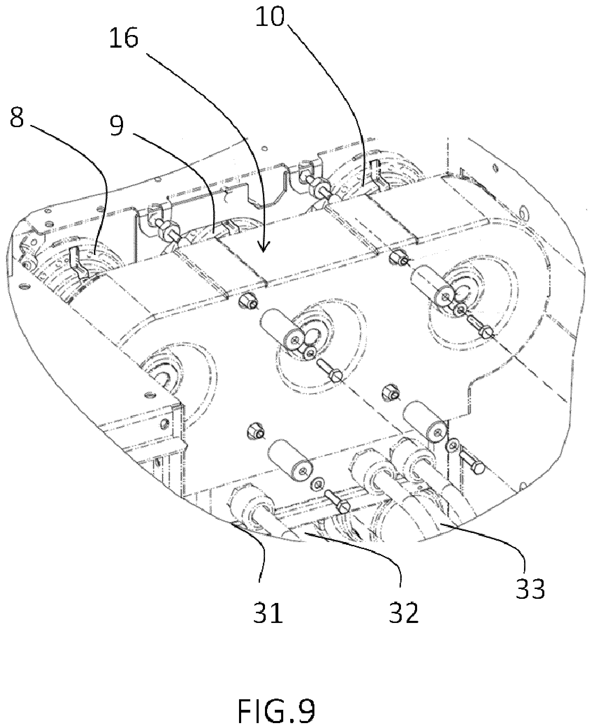

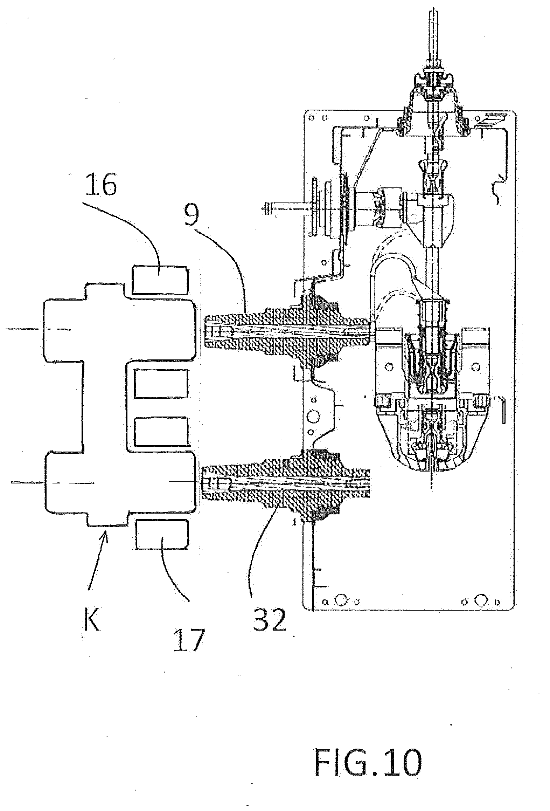

Selon l'invention, et tel que plus particulièrement illustré sur les figures 8 à 11, l'unité comporte, au niveau du disjoncteur 2, un ensemble de trois traversées supplémentaires 31,32,33 destinées à être associées chacune à une phase et disposées respectivement chacune en dessous des traversées 8,9,10 dites premières ou principales associées au disjoncteur 2.

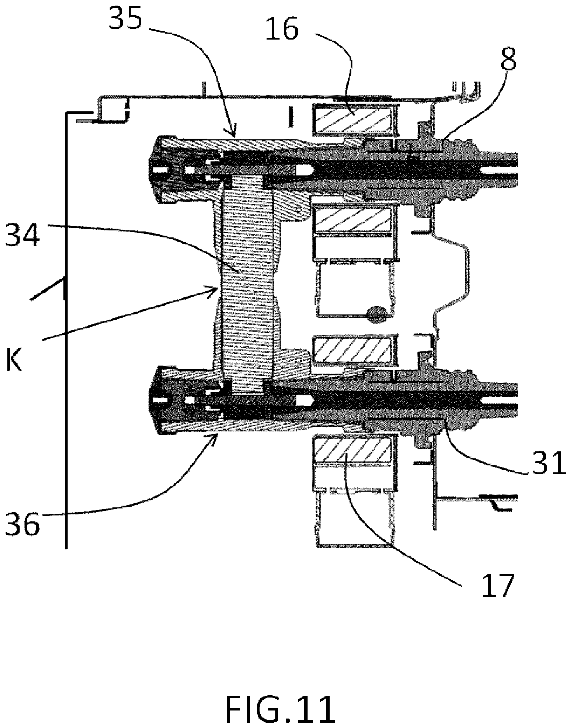

Cette unité U comporte également (associé à ce nouveau jeu de traversées), un jeu de barre additionnel K isolé et blindé, ce jeu de barres comportant trois ensembles i,j,k comportant chacun une portion de barre 34 rectiligne destinée à être reliée mécaniquement à ses deux extrémités opposées à deux éléments de connexion 35,36 en forme de T, chaque élément de connexion comportant une partie creuse plus particulièrement illustrée sur la figure 11, ces deux parties creuses d'un ensemble étant aptes à recevoir respectivement les deux parties d'extrémité libres de deux traversées 8,31 associées au disjoncteur 2 correspondant à une même phase. Ainsi, lorsque ces parties d'extrémité libres des traversées sont montées à l'intérieur des éléments de connexion, ces éléments de connexion 35,36 sont montés rigidement autour des traversées de manière à assurer leur fixation sur lesdites traversées et à assurer la conduction électrique entre ces deux traversées 8,31 d'une même phase.

Ces deux éléments de connexion en forme de T 35,36 sont destinés à supporter pour l'un, un transformateur dit de mesure de protection 16, destiné à coopérer avec le disjoncteur, et pour l'autre, un transformateur dit de mesure du courant 17, destiné à permettre le comptage du courant. Ces deux capteurs sont du type à tore basse tension et se présentent chacun sous la forme de deux blocs comportant chacun trois orifices par lesquels lesdits capteurs sont destinés à être montés autour des éléments de connexion préalablement au montage de ces éléments de connexion autour des traversées. Ainsi, en position montée des éléments de connexion sur les traversées, ces capteurs respectivement de mesure de protection et de mesure de courant entourent trois éléments de connexion et les parties d'extrémité libre des traversées situées à l'intérieur de ces éléments de connexion.

Tel qu'illustré sur la figure 8, les sectionneurs amont et aval du disjoncteur sont, selon un mode particulier de l'invention, également associés à un jeu de traversées supplémentaires 49, 50,51 et 52, 53, 54 ainsi qu'à un jeu de barre additionnel, lesquelles traversées supplémentaires peuvent recevoir un transformateur de mesure de courant supplémentaire.

Ainsi, l'utilisateur pourra choisir de placer ces transformateurs de courant de mesure à droite ou à gauche du disjoncteur selon l'utilisation qu'il compte faire de l'unité fonctionnelle.

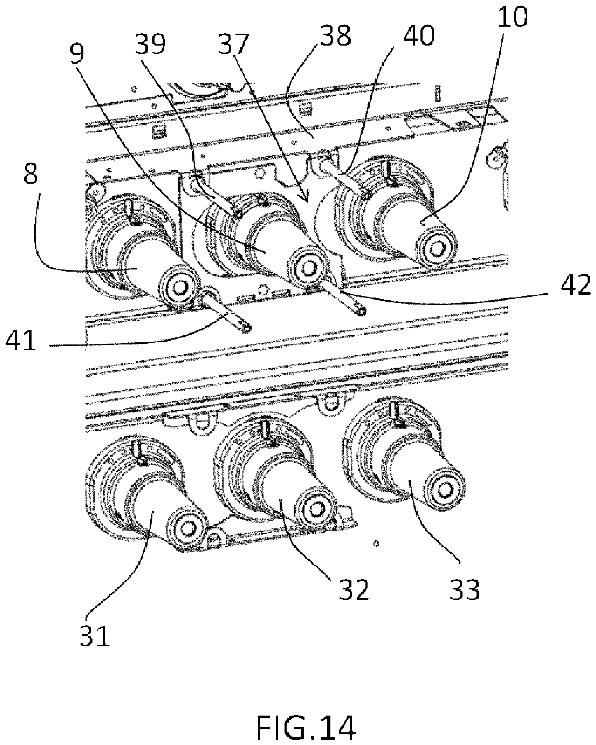

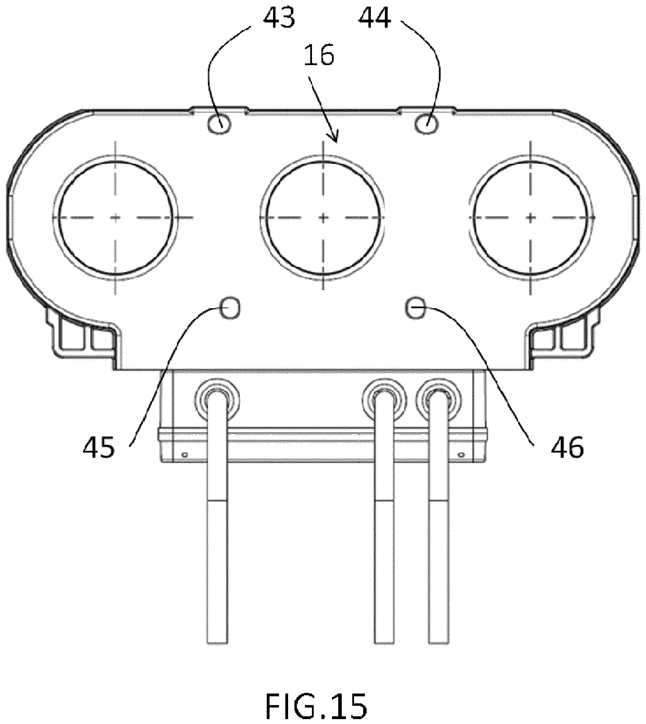

Les figures 14 et 15 illustrent un mode de réalisation avantageux de la fixation d'un capteur autour des traversées permettant de garantir l'absence de chocs sur les traversées lors de la mise en place des capteurs de courant de protection et de mesure. Ces moyens de fixation comportent une plaque en acier inoxydable 37, (ceci afin d'éviter les échauffements dus aux courants de foucault), ladite plaque étant fixée sur une plaque 38 formant support solidaire du châssis de l'unité fonctionnelle et apte à être traversée par les traversées, et quatre tiges 39 à 42 fixées à ladite plaque et s'étendant perpendiculairement à ladite plaque, lesdites tiges servant de guidage aux capteurs.

Le capteur est équipé d'orifices oblongs 43 à 46 disposés de manière à se centrer sur les quatre tiges. Ces tiges ont une longueur au moins égale à celle des traversées, et de ce fait le guidage du capteur qui est lourd (10 à 20 kg), est actif dés le début du positionnement du capteur avant le glissement du capteur autour des traversées. Ce système présente en outre suffisamment de rigidité et de robustesse pour éviter aussi tout choc et vibration sur les traversées. Un choc sur les traversées peut en effet entraîner une fuite de gaz ou un vieillissement diélectrique dans le temps qui peut être préjudiciable à l'appareillage. Ce système permet de garantir à la fois la fiabilité de l'appareillage et la sécurité des personnes lors du montage des capteurs ou des opérations de maintenance.

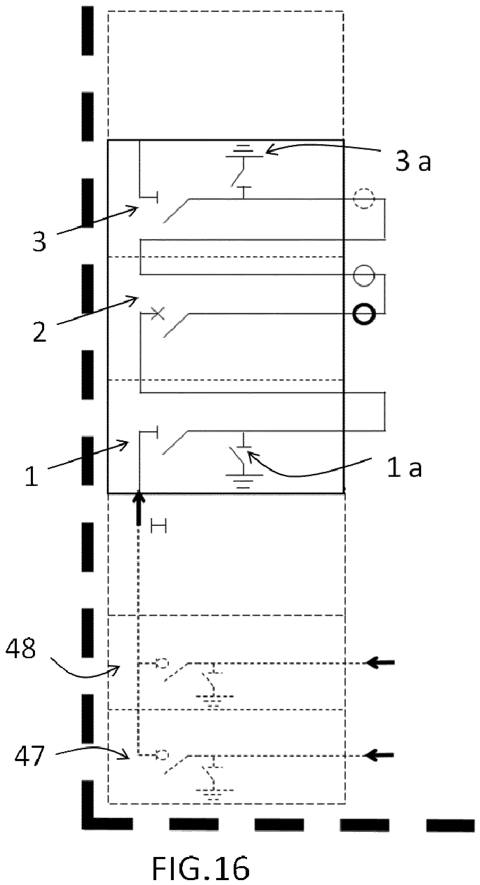

La figure 16 illustre une unité fonctionnelle selon une réalisation particulière de l'invention, cette unité fonctionnelle comportant un appareil de protection électrique dit à double-sectionnement présentant un départ à droite. Cette unité comporte un disjoncteur 2 monté en série en amont avec un sectionneur 1 comportant une position de mise à la terre, et un sectionneur aval 3 comportant également une position de mise à la terre. Cette unité fonctionnelle est montée en série en amont avec deux sectionneur-interrupteurs 47,48 montés en parallèle et comportant chacun une position de mise à la terre, ces deux interrupteur-sectionneur étant reliés électriquement en entrée à une source d'alimentation en courant, et en sortie, à l'entrée de l'unité fonctionnelle U de manière à réaliser son alimentation en courant.

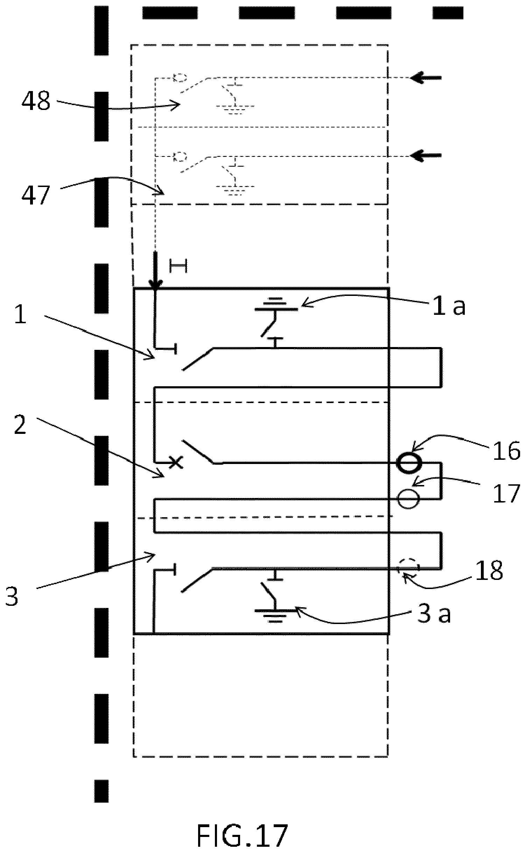

La figure 17 illustre une même unité fonctionnelle que celle précédemment décrite mais présentant un départ à gauche cette fois.

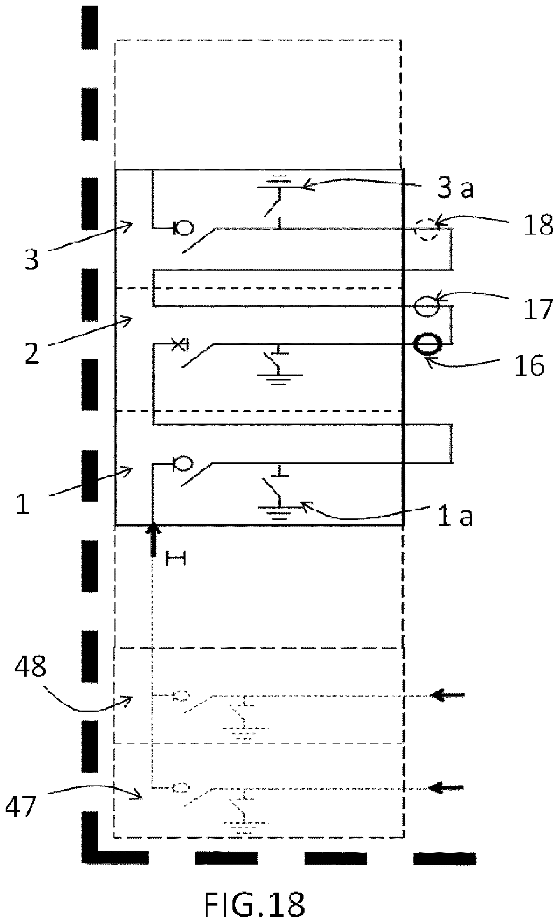

La figure 18 illustre une autre réalisation de l'invention identique à celle illustrée sur la figure 16, à ceci près que les deux sectionneurs amont 1 et aval 3 sont cette fois des interrupteur-sectionneurs et que le disjoncteur comporte une position de mise à la terre.

On voit que dans toutes ces réalisations, le disjoncteur 2 comporte en sortie un transformateur de courant de protection en série avec un transformateur de courant de mesure, et peut comporter également un autre transformateur de courant de mesure situé à l'entrée du sectionneur situé en sortie et destiné à mesurer la quantité de courant délivrée au distributeur.

On a donc réalisé selon l'invention, une unité fonctionnelle moyenne tension à isolation dans le gaz pour environnement sévère, comportant des capteurs de courant modulaires, c'est-à-dire qu'il peut être placé à différents endroits ou pas. L'innovation consiste en un concept de système compact comportant, au niveau de l'un ou de chaque appareil, deux jeux de traversées reliées électriquement par un jeu de barres isolé et blindé, et deux blocs comportant respectivement un transformateur de courant de protection basse tension et un transformateur de courant de mesure. Ces transformateurs sont disposés autour des traversées et des interfaces de connexion du jeu de barres auxdites traversées.

L'invention s'applique avantageusement aux environnements sévères, en particulier dans des conditions de température et d'humidité sévères. L'invention permet d'ajouter facilement un ou plusieurs transformateurs de courant de mesure du courant à droite ou à gauche de l'unité fonctionnelle et permet également une alimentation par la droite ou la gauche de cette unité.

On a donc réalisé selon l'invention un ensemble formé par une cuve renfermant des jeux de barre principaux, des appareillages internes, des traversées, des jeux de barre externes et des transformateurs de mesure offrant une tenue aux environnements sévères et une durée de vie supérieures aux appareillages utilisant des transformateurs de mesure classiques bobinés.

La modularité offerte par l'invention permet de positionner ces capteurs sur chaque fonction (pour le distributeur mais aussi pour la partie client). Cette modularité offre donc la possibilité de réaliser du comptage pour le distributeur mais aussi pour le client dans le cas de production éolienne, de biomasse et de façon plus générale, les énergies renouvelables.

De plus, cet appareillage permettant une alimentation indifféremment par la gauche ou la droite, offre une grande souplesse dans l'agencement des unités fonctionnelles à ajouter.

L'invention permet d'intégrer une fonction comptage dans un volume correspondant à celui d'un appareillage monobloc classique.

Entre autre, il résulte de cet agencement une augmentation de compacité rendant l'agencement optimisé dans le compartiment transformateur et pour l'appareillage. Par ailleurs, la mise en place et la maintenance se réalise en un temps très rapide.

Cette invention s'applique avantageusement à tous les postes de livraison ou du comptage descendant du réseau électrique ou montant (cas des énergies renouvelables) est nécessaire.

Bien entendu, l'invention n'est pas limitée aux modes de réalisation décrits et illustrés qui n'ont été donnés qu'à titre d'exemple.

C'est ainsi par exemple que les sectionneurs amont et aval pourront être des sectionneurs simples, ou bien des interrupteur-sectionneurs ou bien tout type d'appareil comportant des moyens de sectionnement.

## Revendications

1. Appareillage de protection électrique moyenne tension comprenant une enveloppe comportant un gaz isolant et comportant au moins un appareil réalisant une fonction électrique, le ou l'un des appareils réalisant la fonction disjoncteur, la ou chaque fonction électrique étant associée à un jeu de traversées dit principal comportant un certain nombre de traversées, ce nombre correspondant au nombre de phases de l'appareillage, ledit appareillage comportant, associé au disjoncteur (2), un jeu de traversées dit additionnel (31,32,33), les traversées de ce jeu additionnel étant reliées électriquement et mécaniquement respectivement, aux traversées (8,9,10) du jeu de traversées dit principal, par l'intermédiaire d'un jeu de barres isolé et blindé K, dit premier, extérieur à l'enveloppe, **caractérisé en ce que** ces deux ensembles (8,9,10) et (31,32,33) de traversées sont destinées à recevoir respectivement un transformateur de courant de protection (16) et un transformateur de courant de mesure (17) à tore basse tension.

2. Appareillage selon la revendication 1, **caractérisé en ce qu'**il comporte au moins deux appareils (2,3) dont l'un (2) réalise la fonction disjoncteur et dont le ou au moins l'un (3) des autres appareils, est associé à un jeu de traversées additionnel (49,50,51 ou 52,53,54) dont les traversées sont reliées électriquement respectivement aux traversées du jeu de traversées dit principal (5,6,7) ou (11,12,13) correspondant, par un jeu de barres additionnel extérieur dit second isolé K et blindé, ce jeu de traversées additionnel étant destiné à recevoir un transformateur de courant de mesure (18).

3. Appareillage selon la revendication 1 ou 2, **caractérisé en ce qu'**il comporte trois appareils (1,2,3) respectivement un sectionneur (1), un disjoncteur (2) et un sectionneur (3), chaque appareil étant associé à un jeu de traversées additionnel (49,50,51), (31,32,33), (52,53,54) et à un jeu de barre isolé et blindé additionnel, les jeux de traversées additionnels associés aux deux sectionneurs étant aptes à recevoir un transformateur de courant de mesure (18).

4. Appareillage selon l'une quelconque des revendications précédentes, **caractérisé en ce que** le ou chaque transformateur de courant précité (16,17,18) est placé autour des traversées du jeu de traversées correspondant et des interfaces de connexion (35,36) des jeux de barre additionnels (34) auxdites traversées.

5. Appareillage selon l'une quelconque des revendications précédentes, **caractérisé en ce que** le nombre de phase est de trois, chaque fonction étant donc équipée de trois traversées correspondant chacune à une phase.

6. Appareillage selon l'une quelconque des revendications précédentes, **caractérisé en ce que** ledit appareillage comporte des traversées extensibles (14, 15) à chaque extrémité, lesdites traversées étant destinées à permettre l'accouplement de l'appareillage à un autre appareillage du même type.

7. Appareillage selon l'une quelconque des revendications précédentes, **caractérisé en ce que** le(s) transformateur(s) (16,17,18) sont fixé(s) autour des traversées correspondantes par l'intermédiaire d'une plaque (37) en matériau inoxydable fixée sur un support fixe (38) dudit appareillage et comportant quatre tiges (39,40,41,42) fixées à ladite plaque (38), lesdites tiges (39 à 42) s'étendant perpendiculairement à ladite plaque, et étant destinées à coopérer avec quatre orifices oblongs (43 à 46) prévus dans le transformateur, de manière à permettre le guidage dudit transformateur lors de son montage autour des traversées.

## Patentansprüche

1. Mittelspannungsschutzeinrichtung mit einem Gehäuse, das ein Isoliergas aufweist und mindestens ein Gerät aufweist, das eine elektrische Funktion erfüllt, wobei das Gerät oder eines der Geräte die Schutzschalterfunktion erfüllt, wobei die oder jede elektrische Funktion einem als Hauptsatz bezeichneten Satz von Durchführungen zugehörig ist, der eine bestimmte Anzahl von Durchführungen aufweist, wobei diese Anzahl der Phasenanzahl der Einrichtung entspricht, wobei die Einrichtung, zugehörig zum Schutzschalter (2), einen als zusätzlichen Satz bezeichneten Satz von Durchführungen (31, 32, 33) aufweist, wobei die Durchführungen dieses zusätzlichen Satzes elektrisch und mechanisch jeweils mit den Durchführungen (8, 9, 10) des als Hauptsatz bezeichneten Satzes von Durchführungen über eine als erste bezeichnete isolierte und gekapselte Sammelschiene K außerhalb des Gehäuses verbunden sind, **dadurch gekennzeichnet, dass** diese beiden Einheiten (8, 9, 10) und (31, 32, 33) von Durchführungen dafür bestimmt sind, einen Mittelspannungs-Ringkern-Schutzstromwandler (16) beziehungsweise einen Mittelspannungs-Ringkern-Messstromwandler (17) aufzunehmen.

2. Einrichtung nach Anspruch 1, **dadurch gekennzeichnet, dass** sie mindestens zwei Geräte (2, 3) aufweist, von denen eines (2) die Schutzschalterfunktion erfüllt und von denen das andere oder mindestens eines (3) von den anderen Geräten einem zusätzlichen Satz Durchführungen (49, 50, 51 oder 52, 53, 54) zugehörig ist, dessen Durchführungen elektrisch jeweils mit den Durchführungen des entsprechenden Hauptsatzes Durchführungen (5, 6, 7) oder (11, 12, 13) über eine als zweite bezeichnete zusätzliche äußere isolierte und gekapselte Sammelschiene K verbunden sind, wobei dieser zusätzliche Satz Durchführungen dafür vorgesehen ist, einen Messstromwandler (18) aufzunehmen.

3. Einrichtung nach Anspruch 1 oder 2, **dadurch gekennzeichnet, dass** sie drei Geräte (1, 2, 3) aufweist, jeweils einen Trennschalter (1), einen Schutzschalter (2) und einen Trennschalter (3), wobei jedes Gerät einem zusätzlichen Satz Durchführungen (49, 50, 51), (31, 32, 33), (52, 53, 54) und einer zusätzlichen isolierten und gekapselten Sammelschiene zugehörig ist, wobei die den beiden Trennschaltern zugehörigen zusätzlichen Sätze Durchführungen in der Lage sind, einen Messstromwandler (18) aufzunehmen.

4. Einrichtung nach einem der vorhergehenden Ansprüche, **dadurch gekennzeichnet, dass** der oder jeder vorgenannte Stromwandler (16, 17, 18) um die Durchführungen des entsprechenden Satzes Durchführungen und Verbindungsflächen der Verbindung (35, 36) der Zusatzsammelschienen (34) mit den Durchführungen herum platziert ist.

5. Einrichtung nach einem der vorhergehenden Ansprüche, **dadurch gekennzeichnet, dass** die Phasenanzahl drei ist und demnach jede Funktion mit drei Durchführungen versehen ist, die jeweils einer Phase entsprechen.

6. Einrichtung nach einem der vorhergehenden Ansprüche, **dadurch gekennzeichnet, dass** die Einrichtung verlängerbare Durchführungen (14, 15) an jedem Ende aufweist, wobei die Durchführungen dafür vorgesehen sind, die Kopplung der Einrichtung mit einer weiteren Einrichtung vom selben Typ zu ermöglichen.

7. Einrichtung nach einem der vorhergehenden Ansprüche, **dadurch gekennzeichnet, dass** der/die Wandler (16, 17, 18) um entsprechende Durchführungen herum über eine Platte (37) aus einem nichtrostenden Werkstoff befestigt ist bzw. sind, die an einem festen Träger (38) der Einrichtung befestigt ist und vier Stäbe (39, 40, 41, 42) aufweist, die an der Platte (38) befestigt sind, wobei die Stäbe (39 bis 42) senkrecht zu der Platte verlaufen und dafür vorgesehen sind, mit vier länglichen Öffnungen (43 bis 46) zusammenzuwirken, die im Wandler vorgesehen sind, damit die Führung des Wandlers bei seiner Montage um die Durchführungen herum ermöglicht wird.

## Claims

1. Medium-voltage electrical protection appliance comprising an enclosure comprising an insulating gas and comprising at least one device carrying out an electrical function, the or one of the devices carrying out the circuit breaker function, the or each electrical function being associated with a so-called main set of feedthroughs comprising a certain number of feedthroughs, this number corresponding to the number of phases of the appliance, the said appliance comprising, associated with the circuit breaker (2), a so-called additional set of feedthroughs (31, 32, 33), the feedthroughs of this additional set being linked electrically and mechanically, respectively, to the feedthroughs (8, 9, 10) of the so-called main set of feedthroughs, by way of a so-called first insulated and shielded set of busbars K, outside the enclosure, **characterized in that** these two sets of feedthroughs (8, 9, 10) and (31, 32, 33) are respectively intended to receive a protection current transformer (16) and a measurement current transformer (17) with a low-voltage torus.

2. Appliance according to Claim 1, **characterized in that** it comprises at least two devices (2, 3), one of which (2) carries out the circuit breaker function and the or at least one (3) other device of which is associated with an additional set of feedthroughs (49, 50, 51 or 52, 53, 54) whose feedthroughs are electrically linked, respectively, to the feedthroughs of the corresponding so-called main set of feedthroughs (5, 6, 7) or (11, 12, 13), by way of a so-called second additional exterior busbar K, which is insulated and shielded, this additional set of feedthroughs being intended to receive a measurement current transformer (18).

3. Appliance according to Claim 1 or 2, **characterized in that** it comprises three devices (1, 2, 3), respectively a disconnector (1), a circuit breaker (2) and a disconnector (3), each device being associated with an additional set of feedthroughs (49, 50, 51), (31, 32, 33), (52, 53, 54) and an additional insulated and shielded busbar, the additional sets of feedthroughs associated with the two disconnectors being capable of receiving a measurement current transformer (18).

4. Appliance according to any one of the preceding claims, **characterized in that** the or each aforementioned current transformer (16, 17, 18) is placed around the feedthroughs of the corresponding set of feedthroughs and from the connection interfaces (35, 36) of the additional busbars (34) to said feedthroughs.

5. Appliance according to any one of the preceding claims, **characterized in that** the number of phases is three, each function being therefore equipped with three feedthroughs, each corresponding to one phase.

6. Appliance according to any one of the preceding claims, **characterized in that** said appliance comprises feedthroughs (14, 15) that are extensible at each end, said feedthroughs being intended to allow the coupling of the appliance to another appliance of the same type.

7. Appliance according to any one of the preceding claims, **characterized in that** the transformer or transformers (16, 17, 18) is or are fastened around the corresponding feedthroughs by way of a plate (37) of stainless material fastened to a fixed support (38) of said appliance and comprising four rods (39, 40, 41, 42) fastened to said plate (38), said rods (39 to 42) extending perpendicular to said plate, and being intended to cooperate with four oblong orifices (43 to 46) provided in the transformer, so as to allow the guidance of said transformer during its mounting around the feedthroughs.
